# EUROPEAN PATENT APPLICATION

(11) **EP 3 661 328 A1**
(43) Date of publication of application: **03.06.2020**
(21) Application number: 18903610.6
(22) Date of filing: 08.02.2018
(51) Int. Cl.: H05B 33/08, H05B 37/02, F21S 4/10, F21S 10/02, F21V 23/00, F21V 23/02, F21V 23/06, F21Y 103/10, F21Y 115/10, F21W 121/00

(54) **RGB POINT-CONTROL INTELLIGENT BEAUTY LAMP**

(30) Priority: 31.01.2018 CN 201810098656
(71) Applicant: Jiangsu Ledco Lighting Tech Co., Ltd., Yancheng, Jiangsu (CN)
(72) Inventor: CHEN, Genhai, Yancheng, Jiangsu 224000 (CN)
(74) Representative: Lippert Stachow Patentanwälte Rechtsanwälte Partnerschaft mbB
(86) International application number: PCT/CN2018/075735
(87) International publication number: WO 2019/148525

(57) **Abstract**

The present invention discloses a RGB point-controlled intelligent ropelight assembly, wherein an anode and a cathode of a main wire are connected in parallel with light strings; the light string comprises a plurality of diodes connected in series; an address is arranged in the diode and programmed by an encoder; one end of a plug is connected to a power supply and another end of the plug is connected with a resistance wire, a varistor, a filter, a filter circuit; outputs of the filter circuit are connected to an input of a MOSFET and a DCDC transformer; a direct current is output to a driving module and a MCU; the MCU is connected in parallel with a program module, a button, a remote-control module, and a WiFi & Bluetooth module; outputs of the driving module and the transformer are connected to the input of the MOSFET; an output of the MOSFET is connected to the light strings at an end of the main wire. The effect of the product of the RGB point-controlled intelligent ropelight assembly can be achieved by programming the product functions through a computer program to perform single-color, dual-color, and multiple-color control functions.

## Description

### TECHNICAL FIELD

The present disclosure relates to the field of decorative lighting technology, in particular, to a RGB point-controlled intelligent ropelight assembly.

### BACKGROUND

RGB point-controlled intelligent ropelight assembly is one of the main decorations for Christmas, and indispensable decorations for consumers' festivals, culture exchanges, cultural events and lighting projects for public area nightscape.

The traditional RGB point-controlled intelligent ropelight assembly comprises a plurality of light strings connected in parallel to a main wire. The main wire is electrically connected to a control box that controls colors of the plurality of light strings. The control box is electrically connected to a power supply. The light string comprises a plurality of diodes connected in series. A chip is arranged in the diode. The control box, through a fixed program arranged therein, regularly changes the colors of the plurality of light strings. If the color change regulation of the RGB point-controlled intelligent ropelight assembly is changed, it is required for the control box to be removed and the internal program of the control box to be changed, which is time-consuming and laborious.

### SUMMARY

The present invention aims to solve the above-mentioned technical problems to some extent.

Given this, the present invention provides a RGB point-controlled intelligent ropelight assembly, wherein colors of light strings are controlled by a program module of a controller and an encoder, achieving single-color, dual-color or multiple-color control; multiple control methods including remote-control, button-control and wireless-intelligent-terminal-control are also provided.

In order to solve the above technical problems, the present invention provides a RGB point-controlled intelligent ropelight assembly comprising an anode and a cathode of a wire main, wherein the anode and the cathode are connected with a plurality of light strings that are connected in parallel and arranged in the longitudinal direction of the main wire; each of the plurality of light strings comprises a plurality of RGB diodes connected in series; an address is arranged in each of the plurality of RGB diodes, and programmed by an encoder; the plurality of light strings and the main wire are wrapped with a waterproof sheath; one end of a plug is connected to a voltage of 220V and another end of the plug is sequentially connected with a resistance wire for current protection, a varistor for voltage control, a filter for filtering out noise and separating signals, and a filter circuit for passing low frequencies and attenuating high frequencies; outputs of the filter circuit are respectively connected to an input of a MOSFET and a DCDC transformer; the DCDC transformer outputs a direct current with an altered voltage to a driving module and a MCU; the MCU is connected in parallel with a program module, a button, a remote-control module, a WiFi & Bluetooth module, and connected to the driving module through a heat dissipation component; outputs of the driving module and the DCDC transformer are connected to the input of the MOSFET; the program module inputs a command for controlling colors of the plurality of light strings to the MCU and then to the plurality of light strings through an output of the MOSFET.

In an embodiment, each of the plurality of light strings comprises 24, 30 or 36 RGB diodes per meter.

In an embodiment, the WiFi & Bluetooth module is controlled through a wireless terminal.

In an embodiment, the wireless terminal sends a signal to the WiFi & Bluetooth module, and the WiFi & Bluetooth module transmits the received signal to each of the plurality of RGB diodes with an address arranged therein.

In an embodiment, the WiFi & Bluetooth module is a PCBA integrating WiFi and Bluetooth functions.

In an embodiment, the wireless terminal for controlling is a PC, a mobile phone, or a tablet computer.

In an embodiment, the main wire is formed by compression molding of a plastic and a copper wire through an extruder.

In an embodiment, the plug is an IP44 waterproof plug.

In an embodiment, each of the plurality of RGB diode has an outer diameter of 3 mm, 4 mm, or 5 mm.

The technical effect that can be achieved by this present disclosure is as follows:
1. In the RGB point-controlled intelligent ropelight assembly according to the present invention, the light strings and the main wire are wrapped with a waterproof sheath, which is of good waterproof performance, simple and convenient production operation. The main wire is formed by compression molding of a plastic and a copper wire through an extruder, which compression molding is convenient and simple, fully protecting the life of LEDs, and greatly reduces the proportion of defects.
2. The wireless terminal sends a signal to the WiFi & Bluetooth module. The WiFi & Bluetooth module transmits the received signal to the address arranged in each of the plurality of RGB diodes and the program module. The effect of the product of the point-controlled intelligent ropelight assembly can be input to the MCU through the computer module and the product colors can be programmed as desired, so as to control the RGB diode bulbs through single-color control, dual-color control, and multiple-color control functions. The light strings sequentially realizes steady function, reciprocating function, flashing function, running and chasing function.

### BRIEF DESCRIPTION OF THE DRAWINGS

FIG. 1 is a schematic diagram of a RGB diode according to the present invention.
FIG. 2 is a schematic diagram of a RGB point-controlled intelligent ropelight assembly circuit according to the present invention.
FIG. 3 is a schematic structural diagram of a RGB point-controlled intelligent ropelight assembly product according to the present invention.
Fig. 4 is a RGB address encoder of a RGB point-controlled intelligent ropelight assembly according to the present invention.
FIG. 5 is schematic diagram of a circuit of a controller for a RGB point-controlled intelligent ropelight assembly product according to the present invention.

Among them, 1-RGB diode bulb; 2-bracket; 3-electric wire; 4-RGB diode anode; 5-RGB diode cathode; 6-plug; 7-main wire anode; 8-main wire anode; 9-voltage drop resistance; 10-controller; 11-female terminal; 12-sheath; 13-tail plug; 14-encoder; 15-encoder display board; 16-encoder RGB jack; 17-encoder PCB; 18-encoder key; 19-encoder probe.

### DETAILED DESCRIPTION

The present invention is further described in combination with the following embodiments and the accompanying drawings so as to help the skilled in the art to better understand and practice the invention. However, the embodiments set forth herein should not be regarded as limitation of the present invention.

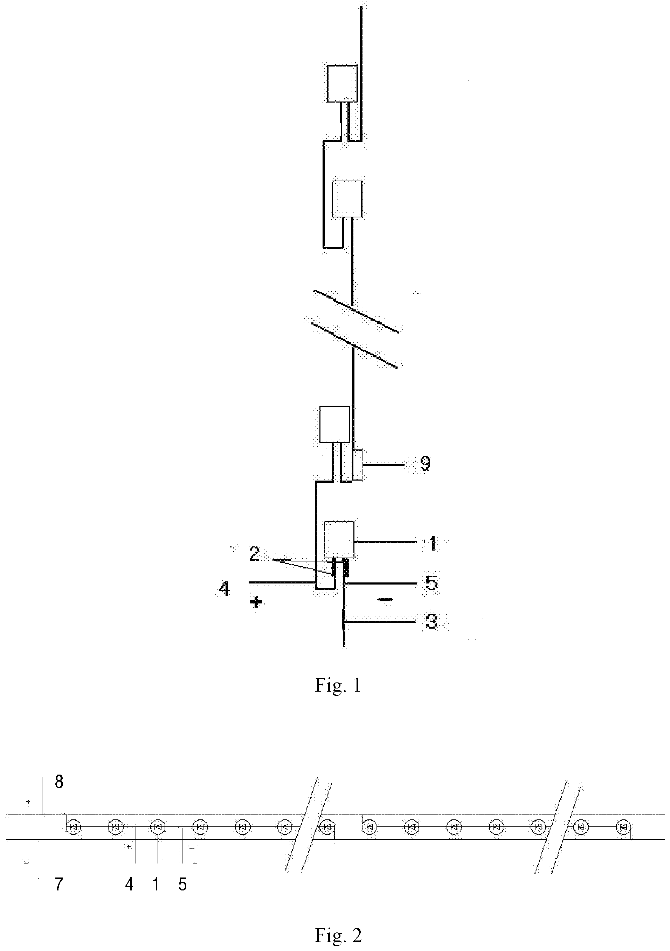

As shown in Figs. 1 and 2, two brackets 2 at a bottom of a RGB diode bulb 1 are connected to an electric wire 3 through welding, which constitutes a RGB diode. Exposed ends of the bottom of the RGB diode form a RGB diode anode 4 and a RGB diode cathode 5, respectively. Each RGB diode anode is connected with an adjacent RGB diode cathode through the electric wire 3, sequentially connecting the RGB diodes to form a light string. The light string has one end connected in series with a main wire anode 8 and a main cathode 7, thus forming a light string loop.

According to an embodiment of the present invention, a voltage drop resistor 9 is provided between the respective RGB diodes.

According to an embodiment of the present invention, the voltage across the RGB diode bulb 1 is 3.0-3.2 V.

According to an embodiment of the present invention, the main wire is formed by compressing molding of a plastic wire and a copper wire through an extruder.

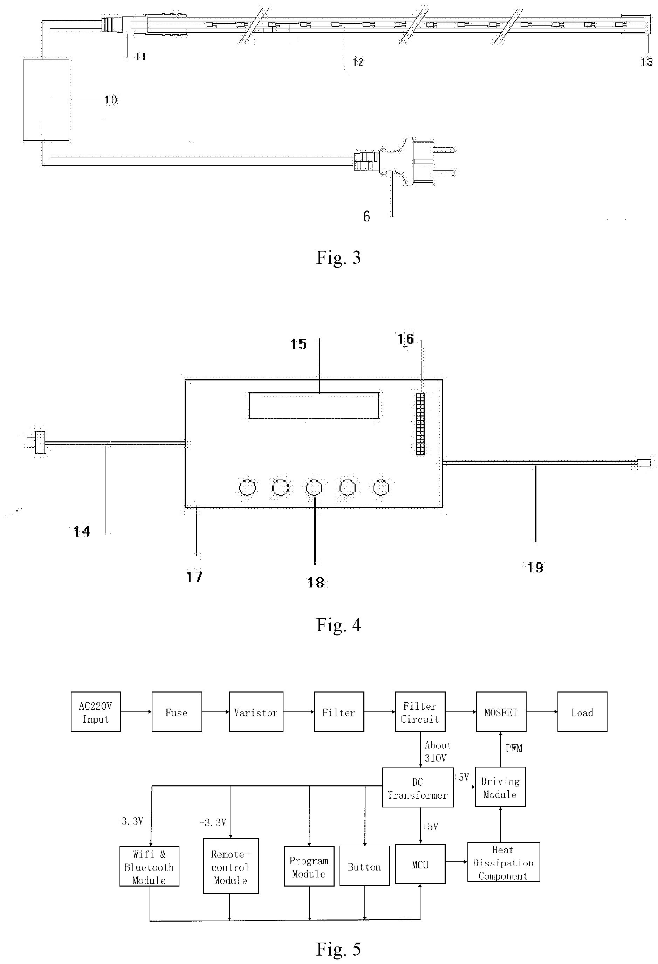

As shown in Fig. 3, an intelligent power supply comprises an IP44 plug 8, a controller 10 and a female terminal 11 that are electrically connected in sequence. A sheath 12 with a tail plug 13 at the tail thereof is arranged on the plurality of light strings. The female terminal 11 is connected with the plurality of light strings connected in parallel to form the entire product structure.

According to an embodiment of the present invention, the number of lights per meter is 24, 30, or 36.

The RGB point-controlled intelligent ropelight assembly can perform the following functions:

### 1. Steady function:

The lights are always on and emit light of red, green, pink, yellow, blue, light green color, all colors and white color, switching a color every 5 seconds. The color of the emitted light is controlled by the controller.

### 2. Reciprocating function:

The lights are turned on in order and emit light of all colors, then only red, green, pink, yellow, blue, light green, white color and so on, switching a color every 5 seconds.

### 3. Flashing function:

The lights, sequentially one group by one group, are flashing with the other groups on. The lights emit light of red, then green, pink, yellow, blue, light green, white color and so on, switching a color every 5 seconds. The frequency of flashing can be increased or decreased.

### 4. Running function 1:

All lights emit light of red, the middle group of LED changes to white and the lights adjacent thereto sequentially changes to white, as if the white color were running, and then all the lights are green, pink, yellow, blue, light green, white color and so on, switching a color every 5 seconds.

### 5. Running function 2:

The lights, divided into groups, sequentially one group by one group, are turned on and then off, i.e., as if the color were running. The lights emit light of red, then green, pink, yellow, blue, light green, white color and so on, switching a color every 5 seconds.

6. All the functions above are automatic and the functions 1 to 5 are auto-displayed. This function can be controlled through a computer program programmed to change the product functions as desired.

As shown in Fig. 4, an encoder 14 for changing colors is provided in the RGB diode. The encoder 14 is assembled on an encoder PCB 17. A power input of the encoder 14 is supplied with a voltage of 9V. The encoder display board 15 is powered on to display parameter values. RGB-1 (RGB diode 1) is inserted into an encoder RGB jack 16 and encoded by the encoder key 18. An encoder probe 19 functions to verify whether a RGB encoding is correct.

As shown in Fig. 5, the entire circuit is shown by the arrow. The plurality of light strings are sequentially arranged along the longitudinal direction of the main wire. The plurality of light strings and the main wire are wrapped with a waterproof sheath 12 into a strip shape. One end of the plug 6 is connected to a voltage of 220V, and another end is sequentially connected with a resistance wire for current protection, a varistor for voltage control, a filter for filtering out noise and separating signals, a filter circuit for passing low frequencies and attenuating high frequencies. Outputs of the filter circuit are respectively connected to an input of the MOSFET and a DCDC transformer. The DCDC transformer outputs a direct current with an altered voltage to a driving module and a MCU. The MCU is connected in parallel with a program module, a button, a remote-control module, a WiFi & Bluetooth module. The program module writes a command for controlling the colors and controls the light strings via the MCU. An output of the MCU is connected to a heat dissipation component and the driving module. Both of outputs of the driving module and the DCDC transformer are connected to an input of a MOSFET while an output of the MOSFET is connected to the light strings at the end of the main wire.

When in use, a wireless terminal sends a signal to the WiFi & Bluetooth module. The WiFi & Bluetooth module transmits the received signal to each of the RGB diodes with an address arranged therein, and the encoder encodes the address of the chip of the RGB diode. Single-color control, dual-color control, and multiple-color control of the RGB diode bulb 1 is achieved by the program module through a written program.

A 220V voltage is connected to the IP44 plug 6 and arrives to the controller input and further to the fuse terminal via the circuit board. The fuse functions as below: when the circuit malfunctions or creates anomalies, the current keeps rising and it probably destroys some crucial devices or expensive devices in the circuit. Consequently, the circuit probably burns out or even a fire can be caused. If a fuse is properly arranged, it will melt when the current abnormally increases to a certain level, and thereby interrupting the current and allowing safe operation of the circuit.

The fuse is connected to the varistor via the circuit board and the varistor is a protective device for voltage limitation. With the non-liner characteristic of the varistor, it can clamp the voltage to a certain value when overvoltage is applied thereon in order to protect the subsequent circuit.

The varistor is connected to the filter via the circuit board. The filter is a circuit or an operating and processing system that is capable of frequency selection, and plays a role in filtering noise and separating a variety of signals. Via the circuit board, the filter is connected to the filter circuit which is configured for allowing passing a current with a certain frequency or attenuating a current with a certain frequency. There are four basic filtering circuits: high-pass filter (high frequencies are passed, low frequencies are attenuated), low-pass filter (low frequencies are passed, high frequencies are attenuated), band-pass filter (only frequencies in a frequency band are passed) and band-stop (trap) filter (only frequencies in a frequency band are attenuated).

The filter circuit is connected to the DCDC transformer via the circuit board. Specifically, the input direct current is converted to an alternating current through a self-oscillating circuit, and further converted to a direct current at an altered voltage transformed by the transformer for output, or further converted to a high-voltage direct current by a voltage doubling rectifier circuit for output.

Via the circuit board, the DCDC transformer terminal is connected to the MCU, a micro control unit, also known as a single-chip microcomputer. A chip-level computer is formed by appropriately reducing the frequency and specifications of the central processor, and integrating peripheral interfaces including those of a memory, a counter, USB, A/D conversion, UART, PLC, DMA, and even LCD drive circuits on a single chip.

The DCDC transformer is connected to the WiFi & Bluetooth module, a remote-control module and a program module via the circuit board. The WiFi & Bluetooth module is a PCBA integrating functions of WiFi and Bluetooth for short-range wireless communication, and it is composed of a data module and a vocal module. The WiFi & Bluetooth module is mainly used in the field of short-range data transmission and it is handy to be connected with a Bluetooth or WiFi device of a PC, a phone and a tablet computer to avoid tedious cable connecting and to take the place of serial link. The remote-control module is configured for controlling and function switching transmission while the program module refers to the component for editing or correcting the function program file of the product. The button is a kind of switch.

Outputs of the WiFi & Bluetooth module, the remote-control module and the program module are connected to the MCU via the circuit board. The output of the MCU is connected to the heat dissipation component configured as a temperature protection component.

The outputs of the DCDC transformer and the heat dissipation component are connected to an input of the driver which is configured for simulating the upper level module of the module to be test and is equivalent to the main program of the module to be test. The output of the driving module is connected to the MOSFET via the circuit board and the output of the MOSFET is connected to the load, wherein the MOSFET is a field-effect diode widely used in analog and digital circuits.

The above embodiments are merely used to fully illustrate the technical solutions of the present disclosure, and are not intended to limit the scope of the present disclosure. It is understood that the present disclosure may be modified or the features may be equivalently replaced without going beyond the spirit and scope of the present disclosure. The protection scope of the invention should be defined by the attached claims.

## Claims

1. A RGB point-controlled intelligent duralight assembly, **characterized in** comprising an anode and a cathode of a wire main, wherein the anode and the cathode are connected with a plurality of light strings that are connected in parallel and arranged in the longitudinal direction of the main wire; each of the plurality of light strings comprises a plurality of RGB diodes connected in series; an address is arranged in each of the plurality of RGB diodes, and programmed by an encoder; the plurality of light strings and the main wire are wrapped with a waterproof sheath; one end of a plug is connected to a voltage of 220V and another end of the plug is sequentially connected with a resistance wire for current protection, a varistor for voltage control, a filter for filtering out noise and separating signals, and a filter circuit for passing low frequencies and attenuating high frequencies; outputs of the filter circuit are respectively connected to an input of a MOSFET and a DCDC transformer; the DCDC transformer outputs a direct current with an altered voltage to a driving module and a MCU; the MCU is connected in parallel with a program module, a button, a remote-control module, a WiFi & Bluetooth module, and connected to the driving module through a heat dissipation component; outputs of the driving module and the DCDC transformer are connected to the input of the MOSFET; the program module inputs a command for controlling colors of the plurality of light strings to the MCU and then to the plurality of light strings through an output of the MOSFET.

2. The RGB point-controlled intelligent ropelight assembly according to claim 1, **characterized in that** each of the plurality of light strings comprises 24, 30 or 36 RGB diodes per meter.

3. The RGB point-controlled intelligent ropelight assembly according to claim 1, **characterized in that** the WiFi & Bluetooth module is controlled through a wireless terminal.

4. The RGB point-controlled intelligent ropelight assembly according to claim 3, **characterized in that** the wireless terminal sends a signal to the WiFi & Bluetooth module, and the WiFi & Bluetooth module transmits the received signal to each of the plurality of RGB diodes with an address arranged therein.

5. The RGB point-controlled intelligent ropelight assembly according to claim 1, **characterized in that** the WiFi & Bluetooth module is a PCBA integrating WiFi and Bluetooth functions.

6. The RGB point-controlled intelligent ropelight assembly according to claim 3, **characterized in that** the wireless terminal for controlling is a PC, a mobile phone, or a tablet computer.

7. The RGB point-controlled intelligent ropelight assembly according to claim 1, **characterized in that** the main wire is formed by compression molding of a plastic and a copper wire through an extruder.

8. The RGB point-controlled intelligent ropelight assembly according to claim 1, **characterized in that** the plug is an IP44 waterproof plug.

9. The RGB point-controlled intelligent ropelight assembly according to claim 1, **characterized in that** each of the plurality of RGB diode has an outer diameter of 3 mm, 4 mm, or 5 mm.

10. The RGB point-controlled intelligent ropelight assembly according to claim 1, **characterized in that** the encoder comprises an encoder key, a display board and a probe, and a program input by the encoder key is displayed on the display board and correctness of a coding is verified by the probe.
